# NEUE EUROPÄISCHE PATENTSCHRIFT

(11) **EP 2 029 360 B2**
(45) Veröffentlichungstag und Bekanntmachung des Hinweises auf die Entscheidung über den Einspruch: **01.11.2023**
(45) Hinweis auf die Patenterteilung: 04.04.2012
(21) Anmeldenummer: 07729300.9
(22) Anmeldetag: 21.05.2007
(51) Int. Cl.: B32B 38/18

(54) **Verfahren und Vorrichtung zur Herstellung von Folienverbünden**
Method and device for producing film composites
Procédé et dispositif de fabrication de films composites

(30) Priorität: 30.05.2006 DE 102006025504
(43) Veröffentlichungstag der Anmeldung: 04.03.2009
(73) Patentinhaber: Mühlbauer GmbH & Co. KG, 93426 Roding (DE)
(72) Erfinder: HEUBACH, Lutz, 09350 Lichtenstein (DE)
(74) Vertreter: Schmidt, Steffen J.
(86) Internationale Anmeldenummer: PCT/EP2007/054856
(87) Internationale Veröffentlichungsnummer: WO 2007/137956

(56) Entgegenhaltungen:
- WO-A-00/27634
- US-A- 5 150 639
- US-A- 5 753 349
- US-A- 5 827 392

## Beschreibung

Die vorliegende Erfindung bezieht sich auf ein Verfahren und eine Vorrichtung zur Herstellung von Folienverbünden, wie aus US-A-5 753 349 bekannt. Solche Folienverbünde werden beispielsweise bei der Herstellung von Scheckkarten oder auch anderen Identifizierungskarten verwendet. Dabei wird eine oder werden mehrere Folien mit einem Trägermaterial oder miteinander verbunden und schließlich aus dem so entstandenen Verbund die einzelnen Karten ausgestanzt. Dabei handelt es sich insbesondere um eine oder mehrere Kunststofffolien, die in bedruckter oder unbedruckter Form vorliegen. Im Rahmen der Herstellung ist es notwendig, dass diese Folien übereinander angeordnet und gegeneinander ausgerichtet werden. Da diese Folien üblicherweise sehr geringe Dicken aufweisen, ist insbesondere der Ausrichtprozess der Folien gegeneinander sehr aufwendig.

Aus dem Stand der Technik ist es bekannt, eine Folie mit Hilfe einer Transporteinrichtung, die die Folie in einer vorgegebenen Richtung bewegt und mit Hilfe von zwei Greifern auf einem Transportband abzulegen, welches die Folien in einer weiteren Richtung transportiert. Dabei weist dieser zweite Transport eine Endlosfolie auf, die motorisch in die Transportrichtung gezogen wird. In einem weiteren Schritt wird im Stand der Technik die Folie bzw. der Bogen ergriffen und entsprechend einer durch zwei Kameras ermittelten XY-Position von Druckmarken definiert auf die Transportfolie des X-Transports als erster Bogen bzw. auf einem vorhandenen ausgerichteten Bogen oder einem vorhandenen ausgerichteten Bogenset abgelegt. Schließlich wird das Bogenset verschweißt. Dieser Vorgang wiederholt sich, bis alle zusammenzutragenden Folien abgelegt, ausgerichtet und verschweißt wurden. Nachfolgend wird von oben eine weitere Endlosfolie zugeführt und mit dem entstandenen Set verschweißt. In einem weiteren Schritt wird das Bogenset geschnitten und die geschnittenen Stücke auf einem Stapel abgelegt. Damit ist es im Stand der Technik erforderlich, kostenintensive Kamerasysteme einzusetzen, um die einzelnen Folien gegeneinander auszurichten.

Zudem ist das im Stand der Technik bekannte Verfahren vergleichsweise zeitaufwendig. Auch sind aus dem Stand der Technik Verfahren bekannt, bei denen ein Transport der Bögen bzw. Folien in einer ersten bzw. Y-Richtung und in einer zweiten hierzu senkrechten bzw. X-Richtung durchgeführt wird. Dabei sind Transporteinrichtungen für den Transport in einer Richtung an den Transporteinrichtungen in der anderen Richtung angeordnet. Beispielsweise ist es bekannt, dass Y-Servoachsen an einer X-Servoachse montiert sind.

Der vorliegenden Erfindung liegt daher die Aufgabe zugrunde, die Kosten für die erfindungsgemäßen Herstellungsvorrichtungen und Verfahren zu reduzieren und daneben auch die Taktzeit zu verkürzen und damit den Durchsatz zu erhöhen. Schließlich soll auch ein im Hinblick auf verschiedene Bogenformate, Bogenanzahlen und der Verarbeitung mit oder ohne Endlosfolie flexibleres Verfahren zur Verfügung gestellt werden.

Diese Erfindung wird erfindungsgemäß durch ein Verfahren nach Anspruch 1 und eine Vorrichtung nach Anspruch 8 gelöst. Vorteilhafte Ausführungsformen und Weiterbildungen sind Gegenstand der Unteransprüche.

Bei dem erfindungsgemäßen Verfahren zur Herstellung von Folienverbünden wird in einem ersten Verfahrensschritt eine erste vereinzelte Folie durch wenigstens eine erste Greifeinrichtung übernommen und die Greifeinrichtung mit der Folie in einer ersten Bewegungsrichtung bewegt. In einem weiteren Verfahrensschritt wird die Position der Folie in der ersten Bewegungsrichtung bestimmt und anschließend die Folie an einer vorgegebenen Position in der ersten Bewegungsrichtung festgesetzt. In einem weiteren Verfahrensschritt wird die Position der ersten Folie in einer zweiten zu der ersten Bewegungsrichtung im Wesentlichen senkrechten Bewegungsrichtung bestimmt und die erste Folie in der zweiten Bewegungsrichtung bewegt.

Erfindungsgemäß wird die Folie für den Transport in der zweiten Bewegungsrichtung mit einer zweiten Greifeinrichtung ergriffen. Damit erfolgt erfindungsgemäß zunächst eine Bewegung in einer ersten Richtung sowie die Bestimmung einer Position in dieser ersten Bewegungsrichtung. Anschließend erfolgt die Bestimmung der Position in der zweiten Bewegungsrichtung und eine entsprechende Bewegung in dieser zweiten Bewegungsrichtung. Durch diese Auftrennung der einzelnen Bewegungsvorgänge kann die optische Positionserfassung gegenüber dem Stand der Technik erheblich vereinfacht werden. Genauer gesagt sind keine aufwändigen Kamerasysteme nötig, um die jeweilige Position der Folie zu bestimmen, sondern diese Positionsbestimmung kann auch über einfache Druckmarken-und Flächensensoren durchgeführt werden. So ist es beispielsweise möglich, einen Lichtleiter oder Laser einzusetzen, der eine bestimmte Marke auf der Folie erkennt und damit deren Position bestimmt.

Bevorzugt wird nach der Bestimmung der jeweiligen Position der Folie in den beiden Bewegungsrichtungen diese Folie ausgerichtet, wobei das Ausrichten bevorzugt durch ein Ziehen der Folie erfolgt. Durch dieses Ziehen kann verhindert werden, dass es zu Verbiegungen der jeweiligen, sehr dünnen Folien kommt. Die Begriffe Folie und Bogen werden im Folgenden synonym verwendet.

Damit wird bei einem bevorzugten Verfahren die Bestimmung des genauen Ortes der Folie jeweils so vorgenommen, dass die Folie jedenfalls noch nicht an ihrem jeweiligen Zielort angelangt ist und damit jeweils an ihren Zielort gezogen werden kann. Dies kann durch geeignete Anordnung der Bestimmungssensoren für den Ort der Folie erreicht werden.

In einem bevorzugten Verfahren ist die erste Greifeinrichtung nur in der ersten Bewegungsrichtung und die zweite Greifeinrichtung nur in der zweiten Bewegungsrichtung bewegbar. Dabei sind besonders bevorzugt die beiden Greifeinrichtungen unabhängig voneinander bewegbar und insbesondere handelt es sich um voneinander unabhängige Servoachsen, mittels derer die Greifeinrichtungen unabhängig voneinander bewegt werden können.

In einem weiteren vorteilhaften Verfahren wird die erste Folie wenigstens abschnittsweise über oder unter eine zweite Folie geschoben und die Folien anhand ihrer jeweils ermittelten Positonen gegeneinander ausgerichtet. Dieser Prozess kann entsprechend wiederholt werden, wenn Stapel aus mehreren einzelnen Folien gebildet werden. Dabei werden in unterschiedlichen Verfahrensschritten zunächst beispielsweise zwei erste Folien aneinander ausgerichtet, anschließend diese mit einer weiteren Folie ausgerichtet und so weiter.

Bei einem weiteren bevorzugten Verfahren werden die erste Folie und die zweite Folie in der zweiten Bewegungsrichtung gegeneinander ausgerichtet. Dabei sind bevorzugt die beiden Folien jeweils in ihrer ersten Richtung bereits ausgerichtet. Nach dem Ausrichten werden die Folien besonders bevorzugt durch eine Halteeinrichtung gegeneinander fixiert. Dabei kann es sich beispielsweise um eine Stempeleinrichtung handeln, die senkrecht zur Ebene der Folie die beiden Folien aneinander presst.

Bei einem weiteren vorteilhaften Verfahren werden nach dem Ausrichten der Folie die Greifeinrichtungen von der Folie bzw. einer Vielzahl von Folien gelöst. Nach diesem Lösen ist eine Rückstellung bzw. ein Rückhub der jeweiligen Greifeinrichtungen möglich. Vorzugsweise handelt es sich dabei um Greifeinrichtungen, die an zwei voneinander beabstandeten Bereichen der Folie beispielsweise zwei gegenüberliegenden Rändern angreifen und jeweils unabhängig voneinander steuerbar sind. Damit ist durch eine entsprechende Relativbewegung der beiden Greifeinrichtungen auch eine Drehung der Folie in gewissen Maßen möglich.

Nach dem Lösen der Greifeinrichtungen von der Folie ist ein Transport der Folie bzw. des Foliensatzes beispielsweise auf einem Trägerband möglich.

In einem weiteren erfindungsgemäßen Verfahren werden in einem weiteren Verfahrensschritt die Folie bzw. die Folienstapel mit wenigstens einem Folienträger verbunden und insbesondere verschweißt.

Die vorliegende Erfindung ist weiterhin auf eine Vorrichtung zum Herstellen von Folienverbünden gerichtet, welche eine erste Bewegungseinrichtung und wenigstens eine an der ersten Bewegungseinrichtung angeordnete Greifeinrichtung aufweist, um eine Folie zu ergreifen und die Folie in einer ersten Bewegungsrichtung zu bewegen. Daneben ist eine erste Positionsbestimmungseinrichtung vorgesehen, welche die Position der Folie in der ersten Bewegungsrichtung bestimmt sowie eine Steuerungseinrichtung, welche die Bewegung der ersten Bewegungseinrichtung in Reaktion auf die von der ersten Positionsbestimmungseinrichtung bestimmte Position steuert.

Weiterhin ist eine zweite Bewegungseinrichtung mit wenigstens einer zweiten an der zweiten Bewegungseinrichtung angeordneten Greifeinrichtung vorgesehen, um die Folie zu ergreifen und in einer zweiten Bewegungsrichtung zu bewegen. Daneben ist weiterhin eine zweite Positionsbestimmungseinrichtung vorgesehen, welche die Position der ersten Folie in der zweiten Bewegungsrichtung bestimmt. Dabei erfolgt bevorzugt über die Steuerungseinrichtung ebenfalls eine Steuerung der zweiten Bewegungseinrichtung in Reaktion auf die von der zweiten Positionsbestimmungseinrichtung bestimmte Position. Erfindungsgemäß ist die erste Greifeinrichtung im Wesentlichen nur in der ersten Bewegungsrichtung und die zweite Greifeinrichtung im Wesentlichen nur in der zweiten Bewegungsrichtung bewegbar und beide Greifeinrichtungen sind voneinander unabhängig bewegbar.

Bei einer weiteren bevorzugten Ausführungsform ist eine weitere erste Bewegungseinrichtung vorgesehen, an der eine weitere erste Greifeinrichtung angeordnet ist, um eine Folie zu ergreifen und in der ersten Bewegungsrichtung zu bewegen. Auf diese Weise können auch mehrere Folien übereinander angeordnet werden. Vorzugsweise ist auch eine weitere Positionsbestimmungseinrichtung an dieser weiteren ersten Bewegungseinrichtung vorgesehen. Mit dem Begriff erste Bewegungseinrichtungen werden im Folgenden diejenigen Bewegungseinrichtungen verstanden, die die Folien in der ersten Bewegungsrichtung bewegen. Unter zweiten Bewegungseinrichtungen werden diejenigen Bewegungseinrichtungen verstanden, die die Folien in der zweiten Bewegungsrichtung bewegen. Es ist auch möglich, eine Vielzahl von ersten Bewegungseinrichtungen vorzusehen, je nach dem, wie viele unterschiedliche Folien übereinander angeordnet werden sollen. Auch kann die erfindungsgemäße Vorrichtung durch Zuschalten und Abschalten einzelner erster Bewegungseinrichtungen auf die Herstellung von Folienverbünden mit mehr oder weniger Folien eingestellt werden.

Vorzugsweise handelt es sich bei den Bewegungseinrichtungen um Servoachsen.

Bei einer weiteren bevorzugten Ausführungsform ist die erste Positionsbestimmungseinrichtung ein Druckmarkensensor. Besonders bevorzugt ist die zweite Positionsbestimmungseinrichtung ein Flächensensor. Entsprechend wird auch unter der ersten Positonsbestimmungseinrichtung eine Positionsbestimmungseinrichtung verstanden, die die Position der Folien in der ersten Richtung bestimmt und unter einer zweiten Positionsbestimmungseinrichtung eine Einrichtung, die die Position der Folien in der zweiten Bewegungsrichtung bestimmt.

Weitere Vorteile und Ausführungsformen ergeben sich aus den beigefügten Zeichnungen:

Darin zeigen:
- Fig. 1: eine schematische Darstellung zur Veranschaulichung des erfindungsgemäßen Verfahrens;
- Fig. 2: eine schematische Darstellung einer erfindungsgemäßen Vorrichtung in einer ersten Arbeitsposition;
- Fig. 3: eine schematische Darstellung einer erfindungsgemäßen Vorrichtung in einer zweiten Arbeitsposition;
- Fig. 4: eine schematische Darstellung einer erfindungsgemäßen Vorrichtung in einer dritten Arbeitsposition;
- Fig. 5: eine Ansicht einer zu verarbeitenden Folie;
- Fig. 6: eine schematische Gesamtdarstellung einer erfindungsgemäßen Vorrichtung.

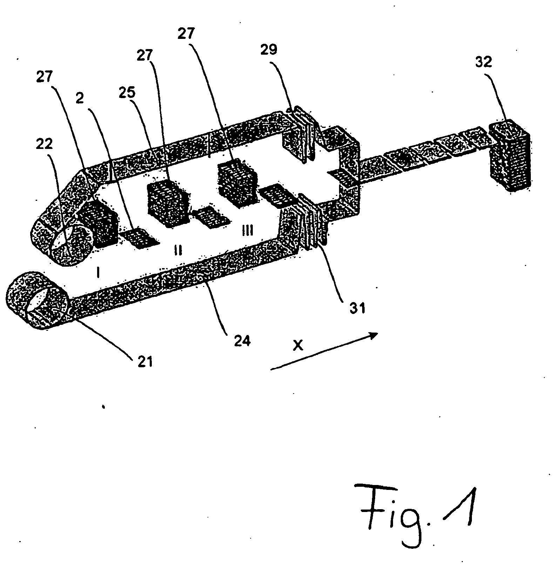

Fig. 1 zeigt eine schematische Darstellung zur Veranschaulichung des erfindungsgemäßen Verfahrens. Bei diesem Verfahren wird über zwei Abwickelvorrichtungen bzw. Rollen 21 und 22 jeweils Endlosfolie 24, 25 abgewickelt und anschließend in X-Richtung transportiert. Bei der hier gezeigten Ausführungsform sind drei Stapel 27 mit übereinander anzuordnenden Folien 2, 6, 7 vorgesehen. Durch die erfindungsgemäßen Vorrichtungen werden die einzelnen Folien 2, 6, 7 von den jeweiligen Stapeln entnommen und in einer definierten Position mittels Druckmarkenbestimmung (genauer unter Verwendung von Druckmarkensensoren und je einen Vision-Sensor pro Zusammentrageeinheit) abgelegt. Anschließend erfolgt ein gerichteter Transport zwischen den beiden Endlosfolien. Hierauf wird darauf hingewiesen, dass auf die Verwendung der Endlosfolien in anderen erfindungsgemäßen Herstellungsverfahren auch verzichtet werden kann.

Das Bezugszeichen 29 und 31 bezieht sich auf zwei Puffereinrichtungen, welche zur Geschwindigkeitssteuerung für die Abwickelrolle dienen. Genauer wird die Geschwindigkeit der Abwickelvorrichtungen in Abhängigkeit von den Füllständen der Puffereinrichtungen 29, 31 gesteuert. In den einzelnen Bearbeitungsstationen I, II und III wird zunächst eine erste Folie 2 abgelegt, anschließend auf dieser ersten Folie eine zweite Folie 6 und anschließend wiederum eine weitere Folie 7. Dabei werden in einzelnen Verfahrensschritten diese Folien gegeneinander ausgerichtet. Schließlich werden die Folien bzw. Folienpakete, d.h. die zusammengetragenen Folien mit den Endlosfolien 24 und 25 am jeweiligen Folienanfang und am Folienende verschweißt. In einem weiteren (nicht im Detail gezeigten) Verfahrensschritt werden die verschweißten Folienbünde entsprechend der Größe der Folien 2, 6, 7 geschnitten. Beim Transport werden die Endlosfolien 24, 25 ebenfalls entsprechend der Foliengröße abgezogen. Falls auf die Verwendung von Endlosfolie verzichtet wird, werden die jeweils geschweißten Folienbünde abgezogen.

Schließlich werden die verschweißten und geschnittenen Folienbünde geordnet auf einem Stapel 32 abgelegt.

Anstelle der hier gezeigten jeweils drei Folien, die gebündelt werden, ist es auch möglich, eine höhere oder geringere Anzahl von Folien miteinander zu bündeln und auch ist es möglich, nur eine Folie beispielsweise mit einer Endlosfolie 24 zu verbinden.

In einem weiterführenden Prozess werden aus den so hergestellten Folienbünden einzelne Kartensegmente, die bereits auf den Folien vorgegeben sind, ausgestanzt.

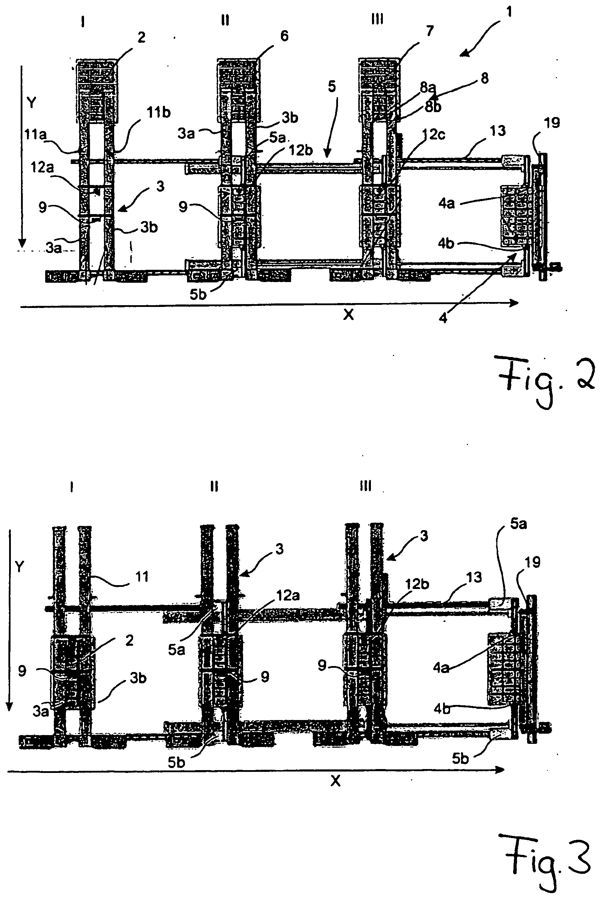

Die Figuren 2 - 4 zeigen eine erfindungsgemäße Vorrichtung in unterschiedlichen Verfahrensschritten. Dabei sind drei Arbeitsstationen I, II und III vorgesehen, sodass im vorliegenden Fall jeweils drei Folien übereinander angeordnet werden. Jede dieser Arbeitsstationen weist eine erste Bewegungseinrichtung 3 auf, um die Folien in die erste Bewegungsrichtung Y zu bewegen. Diese Bewegungseinrichtungen sind hier jeweils in Form zweier parallel zueinander angeordneter Servoachsen 3a, 3b vorgesehen, an denen jeweils erste Greifeinrichtungen 8 angeordnet sind, die die jeweilige Folie 2, 6, 7 greifen. Dabei sind die Greifeinrichtungen vorzugsweise jeweils außen an den beiden Servoachsen 3a, 3b angeordnet, um einen möglichst großen Abstand zwischen den beiden Greifeinrichtungen 8 zu erreichen. Auch sind die beiden Servoachsen 3a, 3b unabhängig voneinander steuerbar. Die Greifeinrichtungen weisen jeweils zwei Greifelemente 8a, 8b auf.

Das Bezugszeichen 9 bezieht sich auf eine Fixierungseinrichtung, welche die insbesondere bereits ausgerichtete Folie gegenüber einer Unterlage fixiert. Dabei kann es sich beispielsweise um einen Druckstempel oder dergleichen handeln.

Die Bezugszeichen 11a, 11b beziehen sich auf hier jeweils an den Servoachsen 3a, 3b angeordnete Druckmarkensensoren, die vorzugsweise mit optischen Schaltern ausgestaltet sind und gemeinsam die erste Positionsbestimmungseinrichtung bilden.

Diese Druckmarkensensoren 11a, 11b dienen zur Bestimmung der Position der Folie in der ersten Bewegungsrichtung Y.

Das Bezugszeichen 5 bezieht sich auf zweite Bewegungsrichtungen, mit deren Hilfe die Folie in X-Richtung bewegt werden kann. Diese sind hier als Servoachsen 5a, 5b ausgeführt. Daneben sind Linearführungen 13 vorgesehen, die mechanisch jeweils mit den Bewegungseinrichtungen 5 gekoppelt sind. Bei dieser Ausführungsform sind ebenfalls zwei voneinander unabhängige Servoachsen 5a, 5b vorgesehen, die eine Bewegung der Folien in X-Richtung erlauben.

Entsprechende zweite Greifeinrichtungen mit Greifelementen 4a, 4b dienen ebenfalls zum Greifen der Folien für eine Bewegung derselben in X-Richtung. Auch diese Greifelemente 4a, 4b sind voneinander möglichst weit beabstandet.

An die Vorrichtung 1 schließt sich eine Umlenkwalze 19 an, um die gebündelten Folien aus der Vorrichtung abzuziehen. Die Bezugszeichen 12a, 12b, 12c beziehen sich auf zweite Positionsbestimmungseinrichtungen, die hier als optische Flächensensoren ausgeführt sind. An jeder der einzelnen Stationen ist eine derartige zweite Positionsbestimmungseinrichtung vorgesehen. Auch die jeweils ersten Positionsbestimmungseinrichtungen sind in jeder der Stationen I, II, III an den einzelnen Servoachsen 3a, 3b vorgesehen.

Unter Bezugnahme auf die Figuren 2 - 4 wird im Folgenden das erfindungsgemäße Verfahren erläutert. In einem ersten Verfahrensschritt wird eine vereinzelte Folie durch zwei an den beiden Servoachsen 3a, 3b angeordnete Greifelemente 8a, 8b aufgenommen. Diese ergriffene Folie wird in Y-Richtung transportiert und gleichzeitig durch ein Verfahren der beiden Servoachsen 3a, 3b in Y-Richtung ausgerichtet. Daneben werden zwei Druckmarkenpositionen der Folie durch die beiden Druckmarkensensoren 11a, 11b beim Passieren der Folie abgefragt. Dieses Abfragen kann die genaue Position der Folie in Y-Richtung ermitteln.

In einem weiteren Verfahrensschritt wird die Bewegung in Y-Richtung an einer vorbestimmten und auf Grundlage der ermittelten Position der Folie vorgegebenen Position angehalten. Dabei werden die beiden Bewegungseinrichtungen bzw. Servoachsen 3a, 3b angehalten.

Damit ist nun die Folie 2 in Y-Richtung bereits ausgerichtet und wird durch die Greifelemente 8a, 8b an der Bewegungseinrichtung 3 gehalten. In einem weiteren Verfahrensschritt wird die Position einer weiteren Druckmarke auf der Folie für die Ortsbestimmung in X-Richtung ausgelesen. Dabei kann es sich beispielsweise um ein Kreuz oder einen Kreis handeln, dessen genaue Position gegenüber einer Soll-Position bestimmt wird. Zum Ermitteln dieser Position wird die zweite Positionsbestimmungseinrichtung 12 in Form eines Flächensensors eingesetzt.

In einem weiteren Verfahrensschritt werden die Greifelemente 4a, 4b an der zweiten Bewegungseinrichtung 5 geschlossen und in einem weiteren Verfahrensschritt die Greifeinrichtungen 8 bzw. die Greifelemente 8a, 8b geöffnet. Damit ist von diesem Zeitpunkt ab ein Transport in X-Richtung möglich und die ersten Greifelemente, die für die Bewegung in Y-Richtung verantwortlich sind, haben keinen Einfluss mehr auf die Bewegung der Folie.

In einem weiteren Verfahrensschritt wird die Folie um eine feste Weglänge mit Hilfe der zweiten Greifelemente 4a, 4b in die zweite Station II übermittelt und weiterhin mit den zweiten Greifeinrichtungen 4 gehalten. Das Auslesen der Position in X-Richtung könnte jedoch auch während der Bewegung der Folie erfolgen.

In einem weiteren Verfahrensschritt wird in der Station II eine zweite Folie 6 in Y-Richtung über die erste Folie 2 gezogen und dort gehalten. Dabei wird auch diese zweite Folie in Y-Richtung durch die Positionsbestimmungseinrichtungen 11a, 11b in der zweiten Station II ausgerichtet, wie oben beschrieben. Gleichzeitig wird auch in der ersten Station I eine weitere Folie in Y-Richtung gezogen. In einem weiteren Verfahrensschritt wird wiederum die Position der Druckmarke für die Position in X-Richtung der zweiten Folie 6 mit Hilfe des Flächensensors 12 b ausgelesen. Zeitgleich findet dieser Vorgang auch mit einer weiteren Folie 2 in der ersten Station I statt. Unter Berücksichtigung der nunmehr bekannten X-Positionen der beiden Folien 2 und 6 wird die Folie 2 unter der festgehaltenen Folie 6 gezogen. Dies bedeutet, dass auch hier die Vorrichtung so eingestellt ist, dass die Position vor dem Ausrichten stets in Richtung X vor der Zielposition liegt, so dass ein Ausrichten jeweils durch Ziehen der Folie möglich ist.

Genauer gesagt, findet in dieser Verfahrensstation ein Ausrichthub der Bewegungseinrichtung 5 bzw. der X-Servoachsen 5a, 5b durch Ziehen der Folie 2 unter der gehaltenen Folie 6 entsprechend den bekannten X-Positionen der beiden Folien 2 und 6 statt.

In einem weiteren Verfahrensschritt werden die beiden nunmehr ausgerichteten Folien durch eine Fixiereinrichtung 9 fixiert. In einem weiteren Verfahrensschritt werden die Greifelemente beider Bewegungseinrichtungen 3, 5 geöffnet und die beiden Bewegungseinrichtungen jeweils in ihre Ausgangsstellungen zurückgefahren, d.h. im Falle der ersten Bewegungseinrichtung in Figur 1 nach oben und im Fall der zweiten Bewegungseinrichtung nach links. In einem weiteren Schritt werden die beiden Folien, die nunmehr ausgerichtet sind, in X-Richtung transportiert, wobei die Fixiereinrichtung ein Verschieben der Folien gegeneinander verhindert. Genauer gesagt werden die beiden Folien in die dritte Station III transportiert und anschließend die Fixiereinrichtung 9 geöffnet. Gleichzeitig wird die weitere erste Folie 2 in die Station II übergeben und eine weitere Folie 6 wird wie oben beschrieben mittels Y-Transport und gleichzeitiger Y-Ausrichtung über die Folie 2 gezogen und dort gehalten. Der parallelle Ablauf findet in der Station III statt, wobei hier jedoch über zwei bereits ausgerichtete Folien 2, 6 eine dritte Folie 7 gezogen wird.

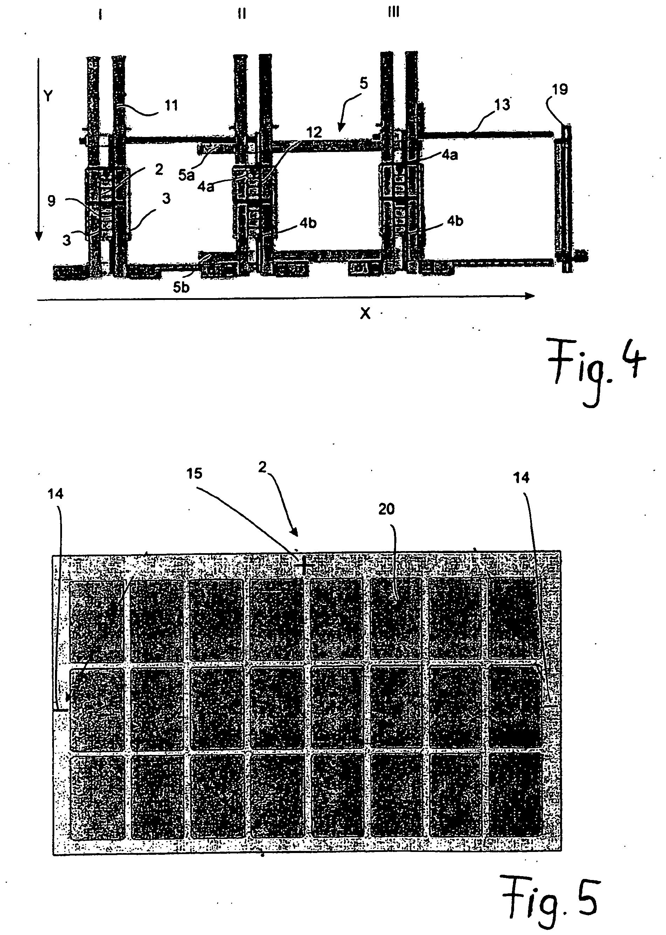

In einem weiteren Verfahrensschritt findet wiederum eine Ausrichtbewegung der Bewegungseinrichtung 5 statt, indem die jeweils die Folie 2 unter der gehaltenen Folie 6 entsprechend der bekannten X-Positionen der beiden Folien vorgenommen wird. Der parallele Ablauf findet in Station III statt, d.h. hier wird das Bündel aus Folien 2 und 6 entsprechend unterhalb der dritten Folie 7 gezogen. Ab hier werden die einzelnen Verfahrensschritte ausgehend von dem Fixieren der ausgerichteten Foliensets durch die Fixiereinrichtung 12 a und 12 b wiederholt. Das oben erwähnte Vereinzeln der einzelnen Folien kann beispielsweise mittels Vakuumsaugern und Blasluft erfolgen. In Figur 3 ist diejenige Situation gezeigt, bei der die Folien bereits in Y-Richtung entsprechend der bekannten Position der Y-Druckmarken der Folien gezogen bzw. ausgerichtet wurden, bzw. diejenige Situation, bei der die ausgerichtete Folie durch die Greifelemente 8a, 8b der ersten Bewegungseinrichtungen 3 gehalten wird. In Fig. 4 ist diejenige Situation gezeigt, nach der ein Rückhub der X-Bewegungseinrichtungen 5 nach dem Ausrichten und Fixieren aller Foliensätze erfolgt ist sowie bereits der Abtransport eines Foliensets durch die Einzugswalzen 19 erfolgt ist.

Dabei ist festzustellen, dass die Bewegung zwischen den einzelnen Stationen in X-Richtung gekoppelt ist, d.h. die Bewegung der Folie 2 von der Station I in die zweite Station II und die Bewegung der Folie 6 von der Station II in die Station III ist miteinander gekoppelt. Das Ausrichten erfolgt jedoch, wie erwähnt, durch eine Bewegung der jeweils neu hinzukommenden Folie, beispielsweise Folie 6 in der zweiten Station II oder der Folie 7 in der dritten Station III. Dabei ist zu berücksichtigen, dass die Steuerungseinrichtung die Position der jeweils untersten Folie bzw. Folienpakete kennt.

Fig. 5 zeigt eine Darstellung einer Folie für ein erfindungsgemäßes Verfahren. Diese Folie weist eine Vielzahl von Kartenelementen 20 auf, die nach dem Verschweißen und Verbinden der einzelnen Folien aus dem Verbund ausgestanzt werden. Ebenso sind jeweils am rechten und linken Rand der Folie Y-Druckmarken 14 vorhanden, die die Ausrichtung der Folie in Y-Richtung mit Hilfe der ersten Positionsbestimmungseinrichtungen 11a, 11b erlauben. Damit dienen die Y-Druckmarken 14 der Erkennung durch den Druckmarkensensor. Das Bezugszeichen 15 bezieht sich auf eine X-Druckmarke, d.h. die Druckmarke, die der Positionsbestimmung in X-Richtung dient. Diese X-Druckmarke, die hier als Kreuz ausgeführt ist, wird durch den optischen Flächenbestimmungssensor 12 a, 12 b und 12 c ausgelesen.

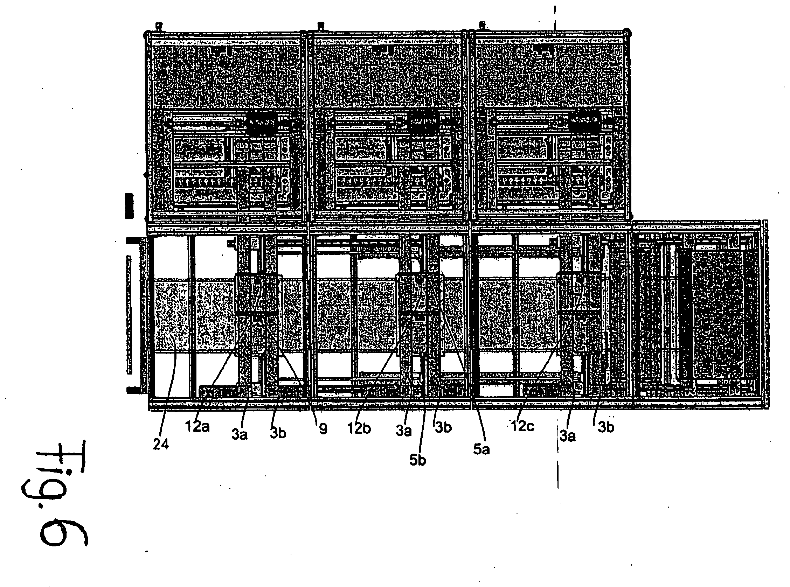

Figur 6 zeigt eine weitere Gesamtdarstellung einer erfindungsgemäßen Vorrichtung. Wie erwähnt, weißt diese Vorrichtung hier drei Stationen auf, um drei Folien übereinander auf einer Endlosfolie 24 anzuordnen. Diese Endlosfolie wird ebenfalls in X-Richtung bewegt. Auch bei dieser Darstellung sind die einzelnen Bewegungseinrichtungen 3a, 3b, 5a, 5b erkennbar.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2, 6, 7: Folien
- 3: Bewegungseinrichtung
- 3a, 3b: Servoachsen
- 4: zweite Greifeinrichtungen
- 4a, 4b: Greifelemente
- 5: zweite Bewegungseinrichtung
- 5a, 5b: Servoachsen
- 8: erste Greifeinrichtungen
- 8a, 8b: Greifelemente
- 9: Fixierungseinrichtung
- 11: erste Positionsbestimmungseinrichtung
- 11a, 11b: Druckmarkensensoren
- 12: Positionsbestimmungseinrichtung
- 12a, 12b, 12c: zweite Positionsbestimmungseinrichtungen
- 13: Linearführungen
- 14: Y-Druckmarke
- 15: X-Druckmarke
- 19: Umlenkwalze
- 20: Kartenelement
- 21, 22: Abwickelvorrichtungen bzw. Rollen
- 24, 25: Endlosfolien
- 27: Stapel
- 29, 31: Puffereinrichtungen
- 32: Stapel

## Patentansprüche

1. Verfahren zum Herstellen von Folienverbünden mit den Schritten:
- Übernahme einer ersten vereinzelten Folie (2) durch wenigstens eine erste Greifeinrichtung (8);
- Bewegen der Greifeinrichtung (8) mit der Folie (2) in einer ersten Bewegungsrichtung (Y)
- Bestimmung der Position der Folie in der ersten Bewegungsrichtung (Y), und Festsetzen der Folie an einer vorgegebenen Position in der ersten Bewegungsrichtung (Y);
- Bestimmen der Position der ersten Folie (2) in einer zweiten, zu der ersten Bewegungsrichtung (Y) im Wesentlichen senkrechten Bewegungsrichtung (X);
- Bewegen der ersten Folie (2) in der zweiten Bewegungsrichtung (X), **dadurch gekennzeichnet, dass** die Folie (2) für den Transport in der zweiten Bewegungsrichtung (X) mit einer zweiten Greifeinrichtung (4) ergriffen wird,
wobei die erste Folie (2) in der ersten Bewegungsrichtung (Y) mittels Greifelementen (8a, 8b) der wenigstens einen Greifeinrichtung (8), die an zwei voneinander beabstandeten Bereichen der Folie¹ an einer in der ersten Bewegungsrichtung (Y) vorneliegenden Kante der ersten Folie (2) angreifen², wenigstens abschnittsweise über oder unter eine zweite Folie (6) gezogen wird³, und
die Folien (2, 6) anhand ihrer jeweils ermittelten Positionen zumindest in der zweiten Bewegungsrichtung (X)⁴ gegeneinander ausgerichtet werden⁵.
¹ Siehe Druckexemplar, S. 4, 11 - 13
² Siehe Druckexemplar, Fig. 2
³ Siehe Druckexemplar, Anspruch 3
⁴ Siehe Druckexemplar, Anspruch 12
⁵ Siehe Druckexemplar, Anspruch 3

2. Verfahren nach Anspruch 1, **dadurch gekennzeichnet, dass** die erste Greifeinrichtung (8) nur in der ersten Bewegungsrichtung (Y), und die zweite Greifeinrichtung (4) nur in der zweiten Bewegungsrichtung (X) bewegbar ist.

3. Verfahren nach wenigstens einem der vorangegangenen Ansprüche, **dadurch gekennzeichnet, dass** eine zweite Folie (6) wenigstens abschnittsweise über oder unter die erste Folie (2) gezogen wird, und die Folien (2, 6) anhand ihrer jeweils ermittelten Positionen gegeneinander ausgerichtet werden.

4. Verfahren nach Anspruch 3, **dadurch gekennzeichnet, dass** die erste Folie (2) und die zweite Folie (6) in der zweiten Bewegungsrichtung (X) gegeneinander ausgerichtet werden.

5. Verfahren nach wenigstens einem der vorangegangenen Ansprüche, **dadurch gekennzeichnet, dass** nach dem Ausrichten der Folie (2) die Greifeinrichtungen (8) von der Folie (2) gelöst werden.

6. Verfahren nach wenigstens einem der vorangegangenen Ansprüche, **dadurch gekennzeichnet, dass** in einem weiteren Verfahrensschritt die Folien (2, 6) mit wenigstens einem Folienträger (24, 25) verbunden werden.

7. Vorrichtung zum Herstellen von Folienverbünden mit
einer ersten Bewegungseinrichtung (3) und
wenigstens einer an der ersten Bewegungseinrichtung (3, 3a, 3b) angeordneten Greifeinrichtung (8) um eine Folie (2) zu ergreifen und in einer ersten Bewegungsrichtung (Y) zu bewegen, mit
einer ersten Positionsbestimmungseinrichtung (11a, 11 b), welche die Position der Folie (2) in der ersten Bewegungsrichtung (Y) bestimmt,
einer Steuerungseinrichtung, welche die Bewegung der ersten Bewegungseinrichtung (3, 3a, 3b) in Reaktion auf die von der ersten Positionsbestimmungseinrichtung (11a, 11b) bestimmte Position steuert,
einer zweiten Bewegungseinrichtung (5, 5a, 5b) mit wenigstens einer zweiten an der zweiten Bewegungseinrichtung (5, 5a, 5b) angeordneten Greifeinrichtung (4), um die Folie zu ergreifen und in einer zweiten Bewegungsrichtung (X) zu bewegen,
einer zweiten Positionsbestimmungseinrichtung (12a, 12b, 12c), welche die Position der ersten Folie in der zweiten Bewegungsrichtung (X) bestimmt, **dadurch gekennzeichnet, dass** die erste Greifeinrichtung (8) im Wesentlichen nur in der ersten Bewegungsrichtung (Y) und die zweite Greifeinrichtung (4) im Wesentlichen nur in der zweiten Bewegungsrichtung (X) bewegbar ist, wobei die wenigstens eine Greifeinrichtung (8) Greifelemente (8a, 8b) aufweist, die dazu eingerichtet sind, an zwei voneinander beabstandeten Bereichen der ersten Folie (2)⁶ an einer in der ersten Bewegungsrichtung (Y) vorneliegenden Kante der ersten Folie (2) anzugreifen⁷ und die erste Folie (2) in der ersten Bewegungsrichtung (Y) wenigstens abschnittsweise über oder unter eine zweite Folie (6) zu ziehen⁸ und die Folien (2, 6) anhand ihrer jeweils ermittelten Positionen zumindest in der zweiten Bewegungsrichtung (X)⁹ gegeneinander gegeneinander auszurichten¹⁰.
⁶ Siehe Druckexemplar, S. 4, 11 - 13
⁷ Siehe Druckexemplar, Fig. 2
⁸ Siehe Druckexemplar, Anspruch 3
⁹ Siehe Druckexemplar, Anspruch 12
¹⁰ Siehe Druckexemplar, Anspruch 3

8. Vorrichtung nach Anspruch 7, **dadurch gekennzeichnet, dass** die Vorrichtung eine weitere erste Bewegungseinrichtung (3) aufweist, an der eine erste Greifeinrichtung (8) angeordnet ist um eine Folie zu ergreifen und in der ersten Bewegungsrichtung (Y) zu bewegen.

9. Vorrichtung nach wenigstens einem der vorangegangenen Ansprüche 7 - 8, **dadurch gekennzeichnet, dass** die erste Positionsbestimmungseinrichtung (11a, 11b) ein Druckmarkensensor ist.

10. Vorrichtung nach wenigstens einem der vorangegangenen Ansprüche 7 - 9, **dadurch gekennzeichnet, dass** die zweite Positionsbestimmungseinrichtung (12a, 12b, 12c) ein Flächensensor ist.

11. Vorrichtung nach wenigstens einem der vorangegangenen Ansprüche 7 - 10, **dadurch gekennzeichnet, dass** die Greifeinrichtungen (8) dazu ausgebildet sind, nach dem Ausrichten der Folie (2) von der Folie (2) gelöst zu werden.

12. Vorrichtung nach wenigstens einem der vorangegangenen Ansprüche 7 - 10, **dadurch gekennzeichnet, dass** die Vorrichtung dazu ausgebildet ist, die Folien (2; 6) mit wenigstens einem Folienträger (24, 25) zu verbinden.

## Claims

1. Method for producing film composites comprising the steps:
- taking over a first separated film (2) by at least a first gripping device (8);
- moving the gripping device (8) with the film (2) in a first direction of movement (Y)
- determining the position of the film in the first direction of movement (Y), and fixing the film at a predetermined position in the first direction of movement (Y);
- determining the position of the first film (2) in a second direction of movement (X) substantially perpendicular to the first direction of movement (Y);
- moving the first film (2) in the second direction of movement (X), **characterized in that** the film (2) is gripped for transport in the second direction of movement (X) by a second gripping device (4),
the first film (2) being gripped in the first direction of movement (Y) by means of gripping elements (8a, 8b) of the at least one gripping device (8), which, at two regions of the film spaced apart from one another, engage on an edge of the first film (2) lying in front in the first direction of movement (Y), is pulled at least in sections over or under a second film (6), and
the films (2, 6) are aligned with respect to one another, at least in the second direction of movement (X), on the basis of their respectively determined positions.

2. Method according to claim 1, **characterized in that** the first gripping device (8) is movable only in the first direction of movement (Y), and the second gripping device (4) is movable only in the second direction of movement (X).

3. Method according to at least one of the preceding claims, **characterized in that** a second film (6) is drawn at least in sections over or under the first film (2), and the films (2, 6) are aligned with respect to one another on the basis of their respective determined positions.

4. Method according to claim 3, **characterized in that** the first film (2) and the second film (6) are aligned against each other in the second direction of movement (X).

5. Method according to at least one of the preceding claims, **characterized in that** after the alignment of the film (2) the gripping devices (8) are released from the film (2).

6. Method according to at least one of the preceding claims, **characterized in that** in a further process step the films (2, 6) are joined to at least one film carrier (24, 25).

7. An apparatus for producing film composites comprising
a first moving means (3) and
at least one gripping means (8) arranged on said first moving means (3, 3a, 3b) for gripping and moving a film (2) in a first moving direction (Y), comprising a first position determining means (11a, 11b) which determines the position of said film (2) in said first moving direction (Y),
a control means control means controlling the movement of said first moving means (3, 3a, 3b) in response to the position determined by said first position determining means (11a, 11b),
second moving means (5, 5a, 5b) including at least a second gripping means (4) disposed on said second moving means (5, 5a, 5b) for gripping and moving said film in a second moving direction (X),
second position determining means (12a, 12b, 12c) which determines the position of the first film in the second direction of movement (X), **characterized in that** the first gripping means (8) is movable substantially only in the first direction of movement (Y) and the second gripping means (4) is movable substantially only in the second direction of movement (X), the at least one gripping means (8) comprising gripping elements (8a, 8b) which are arranged to to engage, at two regions of the first film (2) spaced apart from one another, on an edge of the first film (2) lying in front in the first direction of movement (Y) and to pull the first film (2) in the first direction of movement (Y) at least in sections over or under a second film (6) and to align the films (2, 6) with respect to one another at least in the second direction of movement (X) on the basis of their respectively determined positions.

8. Apparatus according to claim 7, **characterized in that** the device comprises a further first moving means (3), on which a first gripping means (8) is arranged for gripping a film and moving it in the first moving direction (Y).

9. Apparatus according to at least one of the preceding claims 7 - 8, **characterized in that** the first position determining device (11a, 11b) is a print mark sensor.

10. Apparatus according to at least one of the preceding claims 7 - 9, **characterized in that** the second position determination device (12a, 12b, 12c) is an area sensor.

11. Apparatus according to at least one of the preceding claims 7 - 10, **characterized in that** the gripping devices (8) are designed to be released from the film (2) after the film (2) has been aligned.

12. Apparatus according to at least one of the preceding claims 7 - 10, **characterized in that** the device is designed to connect the films (2; 6) to at least one film carrier (24, 25).

## Revendications

1. Procédé de fabrication d'assemblages de films comprenant les étapes suivantes :
- Prise d'un premier film (2) séparé par au moins un premier dispositif de préhension (8) ;
- Déplacement du dispositif de préhension (8) avec le film (2) dans une première direction de déplacement (Y)
- Détermination de la position du film dans la première direction de déplacement (Y), et fixation du film dans une position prédéfinie dans la première direction de déplacement (Y) ;
- Détermination de la position du premier film (2) dans une deuxième direction de déplacement (X) essentiellement perpendiculaire à
la première direction de déplacement (Y) ; -
déplacer le premier film (2) dans la deuxième direction de déplacement (X), **caractérisé en ce que** le film (2) est saisi pour le transport dans la deuxième direction de déplacement (X) avec un deuxième dispositif de préhension (4),
le premier film (2) étant déplacé dans la première direction de déplacement (Y) au dispositif d'éléments de préhension (8a, 8b) du au moins un dispositif de préhension (8), qui agissent sur deux zones de la films espacées l'une de l'autre sur un bord de le première film (2) situé en avant dans la première direction de déplacement (Y), sont tirés au moins par sections sur ou sous une deuxième films (6), et
les films (2, 6) sont alignées l'une par rapport à l'autre au moins dans la deuxième direction de déplacement (X) à l'aide de leurs positions respectives déterminées.

2. Procédé selon la revendication 1, **caractérisé en ce que** le premier dispositif de préhension (8) est mobile uniquement dans la première direction de déplacement (Y), et le deuxième dispositif de préhension (4) est mobile uniquement dans la deuxième direction de déplacement (X).

3. Procédé selon au moins l'une des revendications précédentes, **caractérisé en ce qu'**une deuxième film (6) est tirée au moins par sections sur ou sous la première films (2), et les films (2, 6) sont alignées l'une par rapport à l'autre à l'aide de leurs positions respectives déterminées.

4. Procédé selon la revendication 3, **caractérisé en ce que** la première films (2) et la deuxième film (6) sont alignées l'une par rapport à l'autre dans la deuxième direction de déplacement (X).

5. Procédé selon au moins l'une des revendications précédentes, **caractérisé en ce qu'**après l'orientation du film (2), les dispositifs de préhension (8) sont détachés du film (2).

6. Procédé selon au moins l'une des revendications précédentes, **caractérisé en ce que**, dans une autre étape du procédé, les films (2, 6) sont reliés à au moins un support de film (24, 25).

7. Dispositif pour fabriquer des assemblages de films, comprenant un premier dispositif de déplacement (3) et
au moins un dispositif de préhension (8) disposé sur le premier dispositif de déplacement (3, 3a, 3b) pour saisir un film (2) et le déplacer dans une première direction de déplacement (Y), comprenant un premier dispositif de détermination de position (11a, 11b) qui détermine la position du film (2) dans la première direction de déplacement (Y),
un dispositif de commande, qui commande le mouvement du premier dispositif de déplacement (3, 3a, 3b) en réponse à la position déterminée par le premier dispositif de détermination de position (11a, 11b),
un deuxième dispositif de déplacement (5, 5a, 5b) comprenant au moins un deuxième dispositif de préhension (4) disposé sur le deuxième dispositif de déplacement (5, 5a, 5b) pour saisir le film et le déplacer dans une deuxième direction de déplacement (X),
un deuxième dispositif de détermination
de position (12a, 12b, 12c) qui détermine la position du premier film dans la deuxième direction de déplacement (X), **caractérisé en ce que**
le premier dispositif de préhension (8) peut être déplacé sensiblement uniquement dans la première direction de déplacement (Y) et le deuxième dispositif de préhension (4) peut être déplacé sensiblement uniquement dans la deuxième direction de déplacement (X), ledit au moins un dispositif de préhension (8) comprenant des éléments de préhension (8a, 8b) qui sont adaptés pour, à saisir, dans deux zones espacées l'une de l'autre de la première film (2), un bord de la première film (2) situé en avant dans la première direction de déplacement (Y) et à tirer la première film (2) dans la première direction de déplacement (Y) au moins par sections au-dessus ou au-dessous d'une deuxième film (6) et à orienter les films (2, 6) l'une par rapport à l'autre à l'aide de leurs positions respectives déterminées au moins dans la deuxième direction de déplacement (X).

8. Dispositif selon la revendication 7, **caractérisé en ce que** le dispositif comprend un autre premier dispositif de déplacement (3) sur lequel un premier dispositif de préhension (8) est disposé pour saisir un film et le déplacer dans la première direction de déplacement (Y).

9. Dispositif selon au moins l'une des revendications 7 à 8 précédentes, **caractérisé en ce que** le premier dispositif de détermination de position (11a, 11b) est un capteur de marque d'impression.

10. Dispositif selon au moins l'une des revendications 7 à 9 précédentes, **caractérisé en ce que** le deuxième dispositif de détermination de position (12a, 12b, 12c) est un capteur de surface.

11. Dispositif selon au moins l'une des revendications précédentes 7 à 10, **caractérisé en ce que** les dispositifs de préhension (8) sont adaptés pour être détachés du film (2) après l'orientation de ce dernier.

12. Dispositif selon au moins l'une des revendications précédentes 7 à 10, **caractérisé en ce que** le dispositif est conçu pour relier les films (2 ; 6) à au moins un support de film (24, 25).
